# EUROPEAN PATENT APPLICATION

(11) **EP 0 689 298 A1**
(43) Date of publication of application: **27.12.1995**
(21) Application number: 95303868.4
(22) Date of filing: 06.06.1995
(51) Int. Cl.: H04B 1/38, A45C 15/00

(54) **Portable radio package**

(30) Priority: 21.06.1994 GB 9412380
(71) Applicant: PLESSEY SEMICONDUCTORS LIMITED, Swindon, Wiltshire SN2 2QW (GB)
(72) Inventor: Stockwin, Paul Alan, Fairford, Gloucester GL7 4JD (GB)
(74) Representative: Hoste, Colin Francis

(57) **Abstract**

A portable radio package comprises a radio unit (12) consisting of a WLAN radio, a controller and, where necessary, an auxiliary battery, mounted in a box which is held in a portable case (13). The case also receives a coupling means (20), which may be a flat PCMCIA plug, for coupling the radio unit to a computer (21) (e.g a palm-top or personal digital assistant computer). The case may comprise front and back leaves (14, 15) hinged together, the rear leaf (15) serving to hold the radio unit and the front leaf (14) serving to receive the coupling means in, for example, a credit-card -sized pocket (22). The coupling means is attached to the radio unit by cable (19) and is meant for insertion into a personal computer when the radio is in use. One or more antennae may be mounted on the back leaf as flat antennae, or along one or more sides of the box as dipole antennae. The case may be a padded leather case, preferably a standard diary case, which is small enough to be stored in a jacket pocket when the radio is not in use. When it is desired to use the radio, the case is taken out and opened up and the plug is removed from the front leaf and inserted into the computer. Data may then be typed or written into the computer and transmitted by the radio at will.

## Description

The invention relates to a portable radio arrangement for use with a computer, and in particular, but not exclusively, to such a portable radio arrangement based around a WLAN radio.

Arrangements are known in which a WLAN radio is combined with a small personal computer, e.g. a small laptop or notebook computer or a so-called personal digital assistant, to provide a system whereby a user can enter into the computer a command or a message and cause that command or message to be transmitted via the radio to a similar user elsewhere or to a number of users via an Ethernet system.

The connection between the computer and the radio is made by means of a plug-and-socket arrangement, the socket taking the form of an input port on the computer and the plug being attached to the radio by a cable. In order to interface the commands or messages to the radio, a controlling unit, or controller, is employed.

In accordance with the invention, there is provided a portable radio package, comprising a radio unit, a coupling means for coupling the radio unit to a computer, the coupling means being linked by cable to the radio unit, and a portable case, the case being arranged to hold the radio unit and to removably receive the coupling means.

Provision of such a radio package arrangement greatly facilitates use of a radio with a computer, since the radio itself and peripheral items, such as the coupling means, that are necessary for the operation of the radio with the computer can be conveniently stowed away in, say, a jacket pocket and carried along by the user, and when it is required to use the radio, the case can be taken out and the coupling means removed and coupled up to the computer.

The radio unit may comprise a radio and a controller, the controller being connected between the coupling means and the radio unit and serving to interface the radio unit with the computer.

The radio unit may comprise an auxiliary battery.

The case may be a pocket-sized case having first and second leaves which are joined by a hinging means and which can be opened out or closed together in the manner of a book, the first leaf being arranged to hold the radio unit, and the second leaf being arranged to receive the coupling means.

The coupling means may be a flat plug-in card and the second leaf may comprise a pocket for receiving the flat plug-in card.

The second leaf may comprise one or more additional pockets for receiving one or more accessories for use with the computer, e.g. a memory card.

The radio package may comprise one or more flat antennae mounted on the first leaf of the case, or one or more dipole antennae mounted along one or more sides of the radio unit. A flat antenna configured in this way does not add significantly to the thickness of the package, and where a dipole antenna is run along a narrow edge of the radio unit, there is no increase at all in the thickness.

The case may take the form of a diary case.

An embodiment of the invention will now be described, by way of example only, with reference to the drawings, of which:
Figure 1 is a pictorial view of a portable radio package according to the invention, and
Figure 2 is a pictorial view of the portable radio package of Figure 1 in use with a small personal computer.

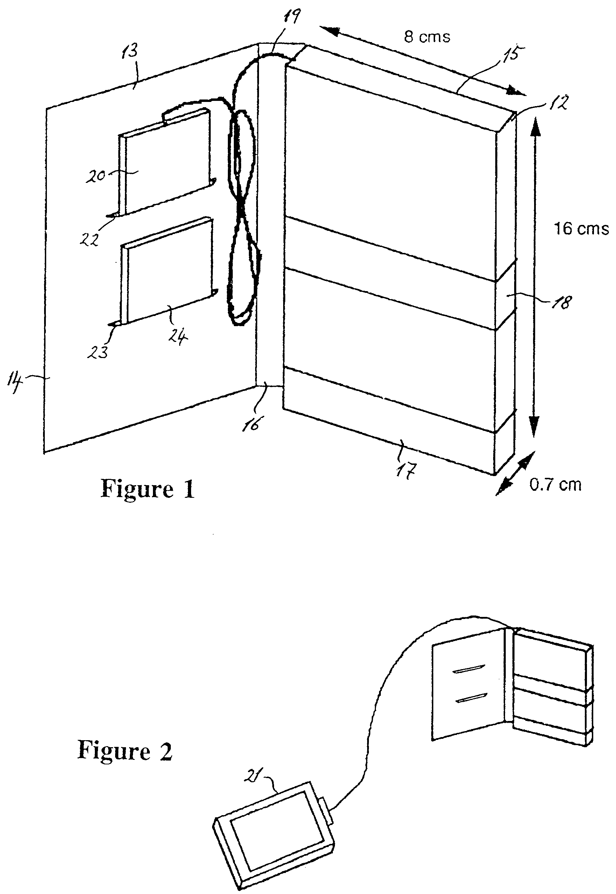

Referring to Figure 1, a portable radio package according to the invention is shown in which a radio unit 12 is retained by a portable case 13. The case 13 is a padded leather case and takes the form of a conventional diary case having a front leaf 14 and a rear leaf 15 joined to the front leaf by a hinge arrangement 16. Thus, the place of a diary which is meant to be retained by the case is taken instead by the radio unit 12. The radio unit 12 comprises a WLAN ("Wireless Local Area Network") radio operating at 2.4-2.483 GHz (for the EC and the USA) or at 2,471-2,497 GHz (for Japan) and a controller and, where necessary, an auxiliary battery all in one box. A specific layout for the radio unit is not shown, since the exact layout is not critical to the functioning of the system. The box has dimensions approximately 16 cm high x 8 cms wide x 7 mm thick and is received by a lower pocket 17, which is part of, or secured to, the rear leaf 15, and is held in place by a strap 18, also secured to the rear leaf 15. A flat printed-circuit-board-style antenna (not shown) is mounted at a suitable point on the inner face of the rear leaf 15.

Emerging from the radio unit 12 is a cable 19 which is connected to a coupling means in the form of a flat credit-card-sized plug 20. The plug 20 is a PCMCIA ("Personal Computer Memory Card Interface Association") plug and is intended to be inserted into a corresponding port in a personal computer 21 (see Figure 2) when the radio package is in use. It serves to communicate messages or commands generated in the computer 21 to the radio in the radio unit 12 for transmission by the radio. It also passes such information in the opposite direction when the radio package is in receive mode. When the radio is not in use, the plug 20 is stowed neatly away in a pocket 22 which is located in the front leaf 14 and is designed to take a standard credit card. Another similar pocket 23 is available to hold other PCMCIA accessories such as a memory expansion card 24 for the computer 21, or a modem.

When the radio is not in use, the case 13 is folded up in the style of a closed book and, because of its compact size, can be easily carried about in a jacket pocket, for example. When the radio is desired to be used, however, the case 13 is taken out and opened up and the plug 20 is removed from its pocket 22 and inserted into the personal computer 21. This computer may take the form of a palm top computer or a personal digital assistant, the latter having the capacity to accept hand-written information on a screen instead of the more conventional typed-in information. A message may now be typed or written into the computer 21 and, upon pressing a suitable key on the computer, this message may be passed to the radio in the radio unit 12 by way of the controller. The controller interfaces the computer output to the radio and controls, for example, the protocol of the message data and determines if it is an appropriate time for the radio to transmit the message, whether there is a vacant channel, etc. It also synchronises data received by the radio when the latter is used in receive mode.

The message transmitted by the radio in the radio unit 12 may be picked up by similar radio packages within the footprint of the transmitting radio and reproduced on the screens of corresponding computers linked to the receiving radios. Alternatively, the message may be picked up by a radio operating on an Ethernet system and passed on from there to any number of personal computers hooked up to the network.

While the invention has been described in terms of use with a WLAN radio operating at the frequencies mentioned earlier, it may also be extended to use with other WLAN and WAN ("Wide Area Network") radio frequencies, and the radio employed may be either a two-way or a pager type. In particular, it is anticipated that the invention will be used in connection with radios operating at between 5.15 and 5.30 GHz according to the HIPERLAN standard currently being formulated by the European Technical Standards Institute, Res 10.

## Claims

1. A portable radio package, comprising a radio unit (12), a coupling means (20) for coupling the radio unit to a computer (21), the coupling means being linked by cable (19) to the radio unit, and a portable case (13), the case being arranged to hold the radio unit and to removably receive the coupling means.

2. A portable radio package, as claimed in Claim 1, in which the radio unit comprises a radio and a controller, the controller being connected between the coupling means and the radio unit and serving to interface the radio unit with the computer.

3. A portable radio package, as claimed in Claim 2, in which the radio unit comprises an auxiliary battery.

4. A portable radio package, as claimed in any one of the preceding claims, in which the case is a pocket-sized case having first and second leaves (15, 14) which are joined by a hinging means (16) and which can be opened out or closed together in the manner of a book, the first leaf (15) being arranged to hold the radio unit, and the second leaf (14) being arranged to receive the coupling means.

5. A portable radio package, as claimed in Claim 4, in which the coupling means is a flat plug-in card (20) and the second leaf comprises a pocket (22) for receiving the flat plug-in card.

6. A portable radio package, as claimed in Claim 5, in which the second leaf comprises one or more additional pockets (23) for receiving one or more accessories for use with the computer, e.g. a memory card (24).

7. A portable radio package, as claimed in any one of Claims 4 to 6, including one or more flat antennae mounted on the first leaf of the case.

8. A portable radio package, as claimed in any one of Claims 4 to 6, including one or more dipole antennae mounted along one or more sides of the radio unit.

9. A portable radio package, as claimed in any one of Claims 4 to 8, in which the case takes the form of a diary case.
